# FASCICULE DE BREVET EUROPEEN

(11) **EP 3 892 514 B1**
(45) Date de publication et mention de la délivrance du brevet: **26.07.2023**
(21) Numéro de dépôt: 21166929.6
(22) Date de dépôt: 06.04.2021
(51) Int. Cl.: B61D 25/00, B61D 41/00, B61L 15/00, G03B 21/28, G03B 21/60

(54) **VOITURE DE TRANSPORT PUBLIC, COMPRENANT UN DISPOSITIF D'AFFICHAGE SUR UNE VITRE**
ÖFFENTLICHES TRANSPORTFAHRZEUG, DAS EINE ANZEIGEVORRICHTUNG AUF EINER SCHEIBE UMFASST
CAR FOR PUBLIC TRANSPORT VEHICLE, COMPRISING A DISPLAY DEVICE ON A WINDOW

(30) Priorité: 07.04.2020 FR 2003458
(43) Date de publication de la demande: 13.10.2021
(73) Titulaire: ALSTOM Transport Technologies, 93400 Saint-Ouen (FR)
(72) Inventeur: SIMONI, Bastian, 94130 NOGENT SUR MARNE (FR); DUBOIS, Alexandre, 75014 PARIS (FR); DESJARDINS, Michel, 13013 MARSEILLE (FR)
(74) Mandataire: Lavoix

(56) Documents cités:
- WO-A1-2013/174632
- WO-A1-2018/033402
- CN-Y- 201 170 943
- GB-A- 2 489 642
- JP-A- 2006 053 323
- JP-A- 2016 049 885

## Description

La présente invention concerne une voiture de véhicule de transport public, notamment de véhicule ferroviaire, comportant au moins une fenêtre latérale munie d'une vitre.

Dans certains cas, il est souhaité d'afficher des informations sur la vitre d'une fenêtre latérale de la voiture. A cet effet, on prévoit un dispositif d'affichage d'images sur la vitre.

GB 2 489 642 décrit un exemple de dispositif connu d'affichage d'image sur une vitre.

Les dispositifs d'affichage d'images connus dans l'état de la technique ne sont toutefois pas satisfaisants.

En particulier, certains dispositifs d'affichage comportent des écrans LCD noyés dans la vitre. De tels écrans LCD ne permettent pas une transparence de la vitre, et nécessitent un remplacement complet de la vitre en cas de défaillance.

Afin de conserver une transparence de la vitre, il existe également des dispositifs d'affichage comprenant un projecteur d'images. Toutefois, compte tenu de l'architecture d'une voiture de véhicule ferroviaire, il est difficile d'agencer un tel projecteur d'images de manière à obtenir une image satisfaisante sur la vitre. Plus particulièrement, soit l'image est nette mais trop petite, soit l'image est floue et/ou soumise à une distorsion trapézoïdale. Pour obtenir une image suffisamment grande et nette, il serait nécessaire d'agencer le projecteur à une distance suffisante de la vitre, mais cela n'est pas possible dans un véhicule ferroviaire, du fait de la présence de passagers, et de la forme en arche du plafond auquel est fixé le projecteur, ainsi que de la proximité du voussoir par rapport aux vitrages, zone cible pour l'implémentation de projecteurs.

L'invention a notamment pour but de remédier à ces inconvénients, en proposant un système permettant d'afficher des images suffisamment grandes et nettes, malgré les contraintes liées à l'architecture d'un véhicule ferroviaire.

A cet effet, l'invention a notamment pour objet une voiture de véhicule de transport public selon la revendication 1.

Le système de miroirs permet notamment d'augmenter le trajet parcouru par les rayons lumineux, cela dans un espace de rangement réduit pour le projecteur.

En outre, le projecteur n'est pas dirigé directement vers la vitre, mais à l'opposé, ce qui limite les distorsions trapézoïdales.

Une voiture selon l'invention peut comporter en outre l'une ou plusieurs des caractéristiques suivantes, prises seules ou selon toutes combinaisons techniquement envisageables.
- Au moins l'un des miroirs est relié à un support par des moyens de liaison mobiles permettant un réglage de la position du miroir par translation et/ou par inclinaison.
- Le projecteur d'images est au moins en partie logé dans un logement délimité par le plafond, typiquement un voussoir.
- La fenêtre comporte un film, notamment un film holographique, recouvrant la vitre ou intégré à la vitre, le film formant une surface de projection pour l'image.
- La voiture comporte une pluralité de fenêtres, chacune étant équipée d'un dispositif d'affichage respectif.

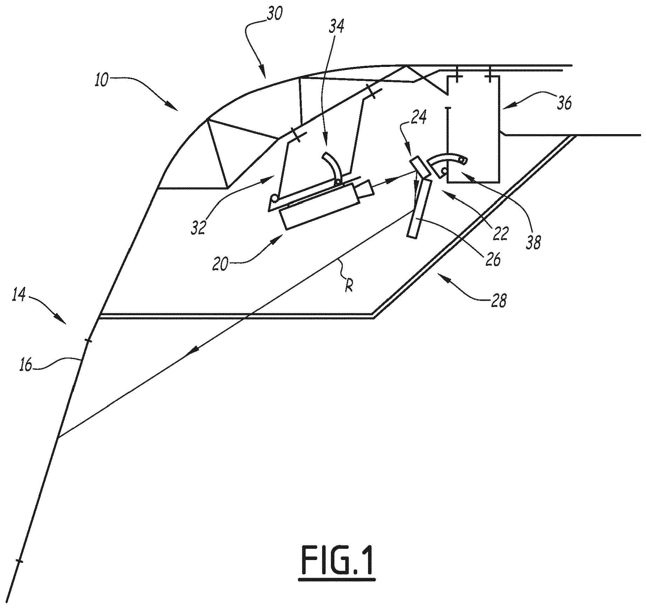

L'invention sera mieux comprise à la lecture de la description qui va suivre, donnée uniquement à titre d'exemple et faite en se référant à la [Fig 1] figure unique annexée, représentant schématiquement une voiture de véhicule ferroviaire selon un exemple de mode de réalisation de l'invention.

On a représenté partiellement et schématiquement, sur la figure, une voiture 10 de véhicule de transport public, notamment de véhicule ferroviaire.

La voiture 10 comporte une caisse structurelle 30 comprenant des parois latérales et un plafond, ainsi qu'un voussoir 28.

Au moins l'une des parois latérales, de préférence chaque paroi latérale, est munie d'au moins une fenêtre 14, comprenant une vitre 16.

La voiture 10 comporte, pour au moins l'une des fenêtres, et de préférence pour chaque fenêtre, un dispositif respectif d'affichage d'images sur la vitre 16.

Le dispositif d'affichage comporte un projecteur d'images 20 propre à émettre des rayons lumineux dans le but de former une image sur une surface de projection. Le projecteur d'images 20 est de préférence un vidéoprojecteur.

L'image peut être de tout type envisageable, et par exemple elle peut comporter un texte informatif.

Le projecteur 20 est logé au moins en partie dans un logement ménagé dans le voussoir 28. Le projecteur d'images 20 est fixé à la caisse structurelle 30 par l'intermédiaire d'un premier support 32, et de premiers moyens de fixation mobiles 34 reliant le projecteur d'images 20 au premier support 32. Le projecteur d'images 20 est inclinable grâce aux premiers moyens de fixation mobiles 34.

Le projecteur 20 est orienté pour émettre les rayons lumineux à l'opposé de la vitre 16. A titre d'exemple, un rayon lumineux R a été représenté sur la figure.

Le dispositif d'affichage comporte par ailleurs un système 22 d'au moins un miroir, agencé pour refléter les rayons lumineux R émis par le projecteur d'images 20, en direction de la vitre 16.

Avantageusement, le système 22 comporte deux miroirs, à savoir un premier miroir 24 et un second miroir 26.

Le premier miroir 24 est agencé pour refléter les rayons lumineux R émis par le projecteur d'images 20, vers le second miroir 26. Le second miroir 26 est agencé pour refléter les rayons lumineux R réfléchis par le premier miroir 24, vers la vitre 16.

Au moins l'un des miroirs 24, 26 est relié à un second support 36 fixé à la caisse structurelle 30, notamment au plafond, par des seconds moyens de fixation mobile 38 permettant un réglage de la position du miroir par translation et/ou par inclinaison.

Il est ainsi possible de régler l'alignement des miroirs pour obtenir une image satisfaisante sur la surface de projection.

Avantageusement, le second miroir 26 est un miroir pixélisé. Un tel miroir pixélisé permet d'agrandir l'image et de corriger la distorsion trapézoïdale due à l'orientation du projecteur 20.

De manière optionnelle, la distorsion trapézoïdale est également corrigée au moyen d'un logiciel adapté, au niveau du projecteur 20.

Avantageusement, les premier 24 et second 26 miroirs sont reliés l'un à l'autre, par exemple au moyen d'une charnière permettant l'inclinaison des miroirs 24, 26 l'un par rapport à l'autre.

De préférence, la fenêtre 14 comporte un film recouvrant la vitre 16 ou intégré (laminé) à la vitre 16, le film formant la surface de projection pour l'image. Ce film est typiquement un film holographique.

Le film permet une meilleure réflexion de l'image que la vitre elle-même, tout en restant transparent ou sensiblement transparent. Le film forme donc une surface de contact efficace.

On notera que les miroirs garantissent une réflexion maximale du flux lumineux émis par le projecteur 20. Il n'y a donc pas de perte de luminosité entre le projecteur 20 et la vitre 16.

On notera que l'invention n'est pas limitée au mode de réalisation précédemment décrit, mais pourrait présenter diverses variantes complémentaires.

## Revendications

1. Voiture (10) de véhicule de transport public, notamment de véhicule ferroviaire, comportant au moins une fenêtre latérale (14) munie d'une vitre (16), et un dispositif d'affichage d'au moins une information sur la vitre (16), le dispositif d'affichage comportant un projecteur d'images (20), fixé de préférence à un plafond de la voiture, destiné à émettre des rayons lumineux (R),
**caractérisé en ce que** le dispositif d'affichage comporte un système (22) d'au moins un miroir (24, 26) agencé pour refléter les rayons lumineux (R) émis par le projecteur d'images (20), en direction de la vitre (16), le système de miroirs (22) comportant un premier (24) et un second (26) miroirs, le premier miroir (24) étant agencé pour refléter les rayons lumineux émis (R) par le projecteur d'images (20) en direction du second miroir (26), et le second miroir (26) étant agencé pour refléter les rayons lumineux (R) réfléchis par le premier miroir (24), en direction de la vitre (16), et le second miroir (24) étant un miroir pixélisé.

2. Voiture (10) selon la revendication 1, dans laquelle au moins l'un des miroirs (24, 26) est relié à un support (36) par des moyens de liaison mobiles (38) permettant un réglage de la position du miroir (24, 26) par translation et/ou par inclinaison.

3. Voiture (10) selon la revendication 1 ou 2, dans laquelle les premier (24) et second (26) miroirs sont reliés l'un à l'autre au moyen d'un dispositif permettant l'inclinaison des miroirs l'un par rapport à l'autre.

4. Voiture (10) selon l'une quelconque des revendications précédentes, dans laquelle le projecteur d'images (20) est au moins en partie logé dans un logement délimité par le plafond, typiquement un voussoir (28).

5. Voiture (10) selon l'une quelconque des revendications précédentes, dans laquelle la fenêtre (14) comporte un film, recouvrant la vitre (16) ou intégré à la vitre (16), le film formant une surface de projection pour l'image.

6. Voiture (10) selon la revendication 5, dans laquelle le film est un film holographique.

7. Voiture (10) selon l'une quelconque des revendications précédentes, comportant une pluralité de fenêtres, (14) chacune étant équipée d'un dispositif d'affichage respectif.

## Patentansprüche

1. Wagen (10) eines Fahrzeugs des öffentlichen Verkehrs, insbesondere eines Schienenfahrzeugs, umfassend mindestens ein Seitenfenster (14), das mit einer Scheibe (16) versehen ist, und eine Anzeigevorrichtung mindestens einer Information auf der Scheibe (16), die Anzeigevorrichtung umfassend einen Bildprojektor (20), der vorzugsweise an einer Decke des Wagens befestigt ist und dazu bestimmt ist, Lichtstrahlen (R) zu emittieren,
**dadurch gekennzeichnet, dass** die Anzeigevorrichtung ein System (22) aus mindestens einem Spiegel (24, 26) umfasst, der angeordnet ist, um die von dem Bildprojektor (20) emittierten Lichtstrahlen (R) in Richtung der Glasscheibe (16) zu reflektieren, das Spiegelsystem (22) umfassend einen ersten (24) und einen zweiten (26) Spiegel, wobei der erste Spiegel (24) angeordnet ist, um die von dem Bildprojektor (20) emittierten Lichtstrahlen (R) in Richtung des zweiten Spiegels (26) zu reflektieren, und der zweite Spiegel (26) angeordnet ist, um die von dem ersten Spiegel (24) reflektierten Lichtstrahlen (R) in Richtung der Glasscheibe (16) zu reflektieren, und der zweite Spiegel (24) ein verpixelter Spiegel ist.

2. Wagen (10) nach Anspruch 1, wobei mindestens einer der Spiegel (24, 26) mittels beweglicher Verbindungseinrichtungen (38), die eine Einstellung der Position des Spiegels (24, 26) durch Verlagerung und/oder Neigung ermöglichen, mit einem Träger (36) verbunden ist.

3. Wagen (10) nach Anspruch 1 oder 2, wobei der erste (24) und der zweite (26) Spiegel mittels einer Vorrichtung miteinander verbunden sind, die eine Neigung der Spiegel in Bezug aufeinander ermöglicht.

4. Wagen (10) nach einem der vorhergehenden Ansprüche, wobei der Bildprojektor (20) zumindest teilweise in einer von der Decke begrenzten Aufnahme, typischerweise einem Tübbing (28), aufgenommen ist.

5. Wagen (10) nach einem der vorherigen Ansprüche, wobei das Fenster (14) eine Folie umfasst, die die Scheibe (16) bedeckt oder in die Scheibe (16) integriert ist, wobei die Folie eine Projektionsfläche für das Bild bildet.

6. Wagen (10) nach Anspruch 5, wobei der Film ein holografischer Film ist.

7. Wagen (10) nach einem der vorherigen Ansprüche, umfassend eine Vielzahl von Fenstern, (14) die jeweils mit einer entsprechenden Anzeigevorrichtung ausgerüstet sind.

## Claims

1. A public transport vehicle (10), particularly a rail vehicle, comprising at least one side bay (14) equipped with a window (16), and a device for displaying at least one item of information on the window (16), the display device comprising an image projector (20), preferably fastened to a ceiling of the vehicle, intended to emit light rays (R), **characterizing in that** the display device comprises a system (22) of at least one mirror (24, 26) arranged to reflect light rays (R) emitted by the image projector (20), in the direction of the window (16), the system (22) of mirrors comprises first (24) and second (26) mirrors, the first mirror (24) being arranged to reflect the light rays (R) emitted by the image projector (20) toward the second mirror (26), and the second mirror (26) being arranged to reflect the light rays (R) reflected by the first mirror (24), toward the window (16), and the second mirror (24) being a pixelized mirror.

2. A vehicle (10) according to claim 1, wherein at least one of the mirrors (24, 26) is linked to a mount (36) by movable linking means (38) that enable an adjustment of the position of the mirror (24, 26) by translation and/or by tilting.

3. A vehicle (10) according to claim 1 or 2, wherein the first (24) and second (26) mirrors are connected to one another by means of a device enabling the mirrors to be tilted relative to one another.

4. A vehicle (10) according to one of the preceding claims, wherein the image projector (20) is at least partially housed in a housing bounded by the ceiling, typically an arched panel (28).

5. A vehicle (10) according to one of the preceding claims, wherein the bay (14) comprises a film covering the window (16) or integrated into the window (16), the film forming the projection surface for the image.

6. A vehicle (10) according to claim 5, wherein the film is a holographic film.

7. A vehicle (10) according to one of the preceding claims, comprising a plurality of bays (14), each being equipped with a respective display device.
